# EUROPEAN PATENT SPECIFICATION

(11) **EP 4 061 625 B1**
(45) Date of publication and mention of the grant of the patent: **08.11.2023**
(21) Application number: 20808263.6
(22) Date of filing: 16.11.2020
(51) Int. Cl.: B29D 30/06, B29D 30/26, B29D 30/00

(54) **PROCESS AND APPARATUS FOR BUILDING TYRES FOR VEHICLE WHEELS**
VERFAHREN UND VORRICHTUNG ZUR HERSTELLUNG VON REIFEN FÜR FAHRZEUGRÄDER
PROCÉDÉ ET APPAREIL DE FABRICATION DE PNEUS POUR ROUES DE VÉHICULE

(30) Priority: 20.11.2019 IT 201900021675
(43) Date of publication of application: 28.09.2022
(73) Proprietor: Pirelli Tyre S.p.A., 20126 Milano (IT)
(72) Inventor: BALIA, Stefano, 20126 Milano (IT); BIGOGNO, Mauro, 20126 Milano (IT)
(74) Representative: Tansini, Elio Fabrizio
(86) International application number: PCT/IB2020/060758
(87) International publication number: WO 2021/099914

(56) References cited:
- EP-A1- 2 386 406
- WO-A1-2011/064698
- WO-A1-2019/102386
- WO-A1-2019/123225
- CN-A- 106 393 757
- JP-A- S4 849 864

## Description

The present invention regards a process and an apparatus for building tyres for vehicle wheels.

In particular, the invention is conveniently employable for building tyres of so-called "self-sealing" type, equipped with a self-sealing layer.

A tyre for vehicle wheels generally comprises a carcass structure comprising at least one carcass ply having respectively opposite end flaps engaged with respective anchoring annular structures, integrated in the zones normally identified with the name "beads", having an internal diameter substantially corresponding to a so-called "fitting diameter" of the tyre on a respective mounting rim. The carcass structure is associated with a belt structure which can comprise one or more belt layers, situated in radial superimposition with respect to each other and with respect to the carcass ply, having textile or metallic reinforcement cords with cross orientation and/or orientation substantially parallel to the circumferential extension direction of the tyre (at 0 degrees). In radially outer position with respect to the belt structure, a tread band is applied, also made of elastomeric material like other semifinished product constituents of the tyre.

Respective sidewalls made of elastomeric material are also applied in axially outer position on the lateral surfaces of the carcass structure, each extended from one of the lateral edges of the tread band up to the respective anchoring annular structure at the beads. In the tyres of "tubeless" type, an air impermeable coating layer - normally termed "liner" - covers the inner surfaces of the tyre.

The building of a green tyre essentially provides that the carcass ply/plies, the anchoring annular structures and/or other components of the carcass structure are made and/or mutually assembled on a building drum to form a so-called "carcass sleeve" having substantially cylindrical shape.

The carcass sleeve is then shaped according to a toroidal configuration, in order to be coupled with a so-called "outer sleeve", previously attained by making and/or assembling together the belt structure, the tread band and/or other components.

In the building processes, of the type termed "two-step", provision is made such that the carcass sleeve made on the building drum be transferred on a shaping drum for the execution and assembly with the outer sleeve.

Following the building of the green tyre actuated by assembly of respective components, a moulding and vulcanisation treatment is generally executed, aimed to determine the structural stabilisation of the tyre by cross-linking the elastomeric compositions as well as to imprint thereon, if requested, a desired tread design and possible distinctive graphic marks at the sidewalls of the tyre.

The self-sealing tyres are capable of delaying or preventing the loss of air and the consequent deflation due to a puncture caused by a pointed object (e.g. a nail). In order to obtain such result, a self-sealing tyre comprises at least one polymeric sealing material layer which can adhere to the object inserted therein and can also flow within the hole when such object is removed, thus sealing the hole itself and preventing the outflow of air from the tyre. Such material within the finished tyre (moulded and vulcanised) must be deformable and sticky.

The document EP 1 435 301 describes a self-sealing tyre obtained by arranging an appropriate elastomeric composition at an inner surface of a non-vulcanised tyre. In one embodiment, a thermoplastic resin film is arranged on a radially inner side of the sealing layer. The elastomeric composition is heated during the vulcanisation of the tyre, determining a chemical reaction and obtaining an elastomeric sealing layer.

JP S-48 49864 A provides an additional example of known method for attaching a puncture-resistant layer to the inner surface of a green tire.

The document WO 2011/064698, in the name of the same Applicant, illustrates how to selectively control the self-sealing capacity of a tyre, through a sealing complex comprising a layer of predefined thickness of sealing material in association with a thermoplastic film. Said complex is placed in the radially more internal position of the tyre to cover the entire circumference thereof for an axial extension for at least the entire crown zone thereof. For purpose of the application, the sealing complex is cut to size and wound around a radially outer surface of a building drum, maintaining the thermoplastic film in a radially more internal position. Opposite end flaps of the sealing complex are mutually joined by means of an adhesive tape, for example. The Applicant has observed that the execution of that illustrated in the document WO 2011/064698 would require that the carcass sleeve being processed, once removed from the building drum, be picked up from the building line in order to be transferred to a remote station, controlled by one or more operators assigned to apply the adhesive tape. Upon completed application, the carcass sleeve must be brought back into the building line for the automated execution of the assembly with the outer sleeve and other processing operations possibly provided for in the building cycle.

The Applicant has observed that in the modern building lines, a careful division of the processing operations on the building drum and in the assembly station make it possible to operate in a manner such that the carcass sleeve removed from the building drum remains for several seconds associated with a transfer device, while awaiting the completion of the assembly operations on a preceding tyre being processed, before being transferred to the assembly station.

The Applicant has perceived that this wait time can be conveniently exploited in order to perform an automated application of the adhesive tape on the junction of the self-sealing layer.

The Applicant has therefore perceived that by arranging a device for manipulating and transporting the aforesaid adhesive tape from a preparation position to within the aforesaid carcass sleeve in wait conditions, the aforesaid application can take place.

The Applicant has finally found that by using a robotic arm or other suitable manipulator, it is possible to perform the application of the adhesive tape directly within the carcass sleeve along the building line thereof, in particular when the latter is still retained by the same transfer device employed for its removal from the building drum.

In a first aspect thereof, the invention is related to a process for building a tyre for vehicle wheels according to claim 1.

According to a further aspect, the invention is related to an apparatus for building a tyre for vehicle wheels according to claim 10.

The Applicant deems that the application of the piece of adhesive tape can therefore be carried out while the carcass sleeve is retained by the same transfer device used for removing it from the building drum while the operations for assembly on a preceding tyre being processed are being completed. The use of a manipulator also excludes the problems of safety connected with the use of manpower, and offers further advantages in terms of reliability of execution and repeatability of results.

In at least one convenient embodiment, the invention can also comprise one or more of the following preferred characteristics. Preferably, after the application of the piece, the carcass sleeve is transferred to an assembly station by means of the transfer device.

The application of the piece of adhesive tape can therefore be carried out while the carcass sleeve is retained by the same transfer device employed for positioning the sleeve itself in the assembly station.

Preferably, the application of the piece is executed while, in the assembly station, a preceding carcass sleeve is assembled with an outer sleeve of a tyre being processed.

By exploiting the wait time for the assembly, it is possible that the cycle time for applying the piece of adhesive tape be "masked" while waiting for the execution of the assembly. The time employed for the application of the piece therefore does not significantly impact the overall tyre building times.

Preferably, removing the carcass sleeve from the building drum comprises translating the carcass sleeve with respect to the building drum along a first direction parallel to a geometric axis of the building drum.

Preferably, transferring the carcass sleeve to the assembly station comprises translating the carcass sleeve with respect to the building drum along a second direction perpendicular to a geometric axis of the building drum.

The assembly station can therefore have a positioning offset with respect to the building drum, so as to not obstruct the access of the manipulator to the carcass sleeve.

Preferably, the application of the piece is executed during a parking of the carcass sleeve removed from the building drum, before transferring the carcass sleeve to an assembly station. Preferably, the application of the piece comprises gripping respectively opposite end sections of the piece by means of gripping elements carried by the manipulator.

Preferably, the application of the piece comprises moving the manipulator away from the support in order to transfer on said junction line the piece retained by the gripping elements. Preferably, the application of the piece comprises disengaging the gripping elements from the end sections of the piece.

The gripping action on the opposite ends of the piece of adhesive tape allows maintaining the latter effectively extended during its transfer from the support to the carcass sleeve, and during the application on the inner surface of the sleeve itself. The piece of adhesive tape is therefore maintained in optimal conditions for the purpose of a correct application against the inner surface. Preferably, said gripping elements are positioned at a predetermined mutual distance before gripping the end sections. Preferably, before gripping the end sections of the piece, a mutual distance between the gripping elements is modified in order to adapt it to the length of the piece to be gripped.

It is therefore possible to increase the versatility of use of the system, by adapting the position of the gripping elements to pieces of different length as a function of the dimensions of the carcass sleeve being processed.

Preferably, gripping said end sections takes place by means of a suction action produced through each of said gripping elements. The gripping elements can thus engage the piece by touching only one side thereof, without having to contact the adhesive side. Preferably, the suction action is produced through at least one spongy insert carried by each gripping element.

The use of the spongy insert facilitates an adaptation of the piece to the internal form of the surface of the carcass sleeve during the application. In addition, the operation of picking up the piece from the support is simplified.

Preferably, provision is also made for translating a pressure roller along the piece after the disengagement of the gripping elements from said end sections, so as to fix the piece along the junction line.

Since the adhesive tape is fixed to the ends, this is relatively stable along the junction line, a stability which predisposes it to the definitive fixing upon action of the pressure roller.

The rolling thus executed allows a uniform adhesion of the piece on the radially inner surface of the self-sealing layer along the junction line.

Preferably, the pressure roller is activated in thrust relation against the inner surface of the carcass sleeve before translating the pressure roller itself along the junction line.

Preferably, the thrust action of the pressure roller is opposed by the transfer device which retains the carcass sleeve.

The same transfer device employed for the transfer of the carcass sleeve is thus exploited for improving the adhesion of the piece. Preferably, the translation of the pressure roller is carried out by means of moving the manipulator, carrying the pressure roller. Preferably, the support retains the piece of adhesive tape by means of two abutment planes that are mutually spaced. Preferably, before arranging the piece of adhesive tape on said support, the mutual distance between the abutment planes is modified in order to adapt it to the length of the piece to be arranged.

It is therefore possible to increase the versatility of use of the system, by adapting it for treating pieces of different length as a function of the dimensions of the carcass sleeve being processed. Preferably, provision is also made for rotating the carcass sleeve to position the junction line in a predetermined position around a geometric axis of rotation of the carcass sleeve before the application of the piece.

An effective interaction with the manipulator is thus facilitated.

Preferably, the positioning of the junction line is actuated by rotating the building drum around the geometric axis of rotation thereof at the end of building of the carcass sleeve.

Preferably, provision is made for acquiring at least one image of said piece during or after the application of the same at said junction line.

Preferably, provision is made for electronically processing said at least one image and comparing the same with a previously stored sample image to verify the correct application of said piece at said junction line.

Preferably, the transfer device comprises closing elements which are mutually approachable to retain the carcass sleeve at a radially outer surface thereof.

Preferably, at least one of the closing elements extends in contact with the radially outer surface of the carcass sleeve, according to an axial extension greater than the axial extension of the self-sealing layer.

Preferably, the transfer device is movable between the building drum and an assembly station configured for assembling the carcass sleeve with an outer sleeve comprising a belt structure. Preferably, the transfer device is movable with respect to the building drum along a first direction parallel to a geometric axis of the building drum.

Preferably, the transfer device is movable with respect to the assembly station along a second direction perpendicular to a geometric axis of the building drum.

Preferably, the manipulator comprises gripping elements that are mutually spaced, each configured for engaging an end section of the piece carried by the support.

Preferably, the gripping elements are movable towards each other to adapt their mutual distance to a length dimension of the piece. Preferably, the gripping elements are carried by an end of an anthropomorphic robotic arm, programmable to be moved according to a desired path between the support and the carcass sleeve carried by the transfer device.

Preferably, each gripping element comprises at least one suction duct converging to a contact surface configured to act against the piece.

Preferably, the contact surface is carried by a spongy insert. Preferably, the spongy insert is fixed against a base wall of the respective gripping element.

Preferably, the gripping element internally has at least one chamber communicating with the suction duct.

Preferably, the spongy insert is made of spongy material with closed cells.

Preferably, the spongy insert has a plurality of through holes distributed on the contact surface.

Preferably, each of the through holes is connected to a respective opening arranged in the base wall of the gripping element. Preferably, a pressure roller is also provided which is activatable in thrust relation against the inner surface of the carcass sleeve retained by the transfer device.

Preferably, the pressure roller is carried by the manipulator and movable along the junction line by moving the manipulator itself. Preferably, the pressure roller is activatable upon command of a fluid-dynamic actuator carried by the manipulator.

Preferably, the pressure roller has a convex shape.

Preferably, a loader is also provided which is configured for arranging a piece of adhesive tape on the support, after a preceding piece has been picked up by a manipulator. Preferably, the support comprises two abutment planes that are mutually spaced.

Preferably, the abutment planes are movable towards each other to adapt their mutual distance to a length dimension of the piece. Preferably, said manipulator is operatively associated with a chamber configured for acquiring at least one image of said piece during or after the transfer of the same to said carcass sleeve. Further characteristics and advantages will be clearer from the detailed description of a preferred but not exclusive embodiment of a process and an apparatus for building tyres for vehicle wheels, in accordance with the present invention. Such description will be set forth hereinbelow with reference to the enclosed drawings, provided only for exemplifying and hence non-limiting purposes, in which:
- figure 1 schematically shows, in plan view, an apparatus for building tyres integrating the present invention;
- figure 2 laterally shows a manipulator approaching a support carrying a piece of adhesive tape;
- figure 3 laterally shows the manipulator engaging the piece that is about to be picked up from the support;
- figure 4 laterally shows the manipulator positioned within a carcass sleeve, with the piece retained at a brief distance from the self-sealing layer arranged on the inner surface of the carcass sleeve itself;
- figure 5 laterally shows the manipulator during the application of the piece against the carcass sleeve;

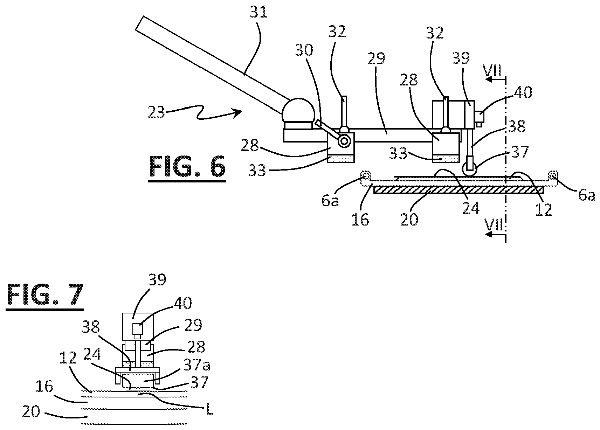

- figure 6 laterally shows the manipulator during the translation of a pressure roller acting along the piece which is applied along a junction line of the self-sealing layer;
- figure 7 shows the pressure roller being processed on the piece, seen according to the direction indicated with VII-VII in figure 6;
- figure 8 shows in more detail one of the gripping elements associated with the manipulator, in cross section according to the trace VIII-VIII of figure 5;
- figure 9 schematically shows, in radial half-section view, a tyre for vehicle wheels, attainable in accordance with the present invention.

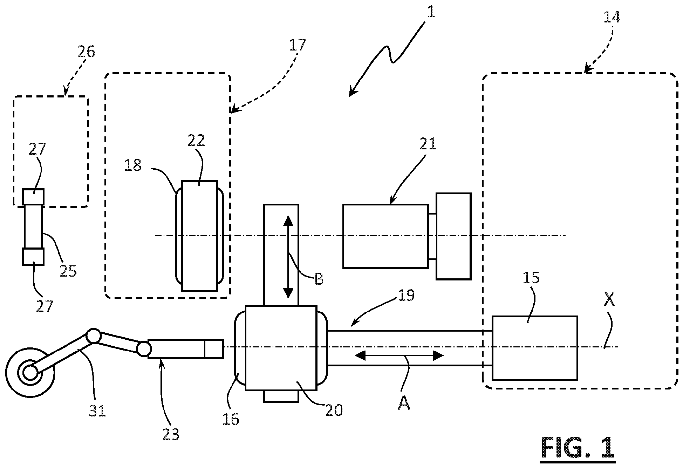

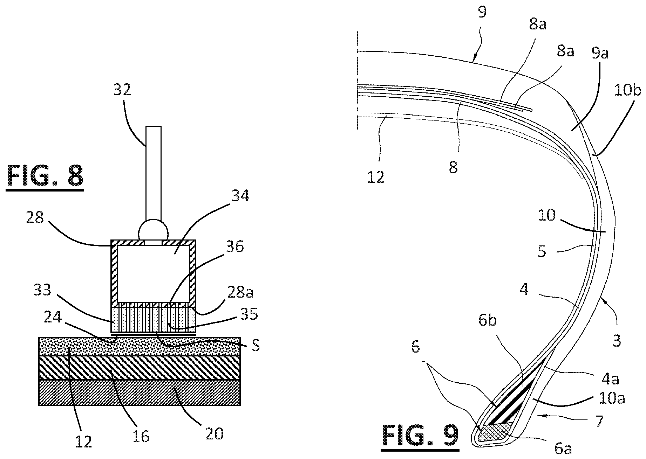

With particular reference to figure 1, reference number 1 overall indicates an apparatus for building tyres for vehicle wheels usable for actuating a building process according to the present invention. One example of a tyre typically obtainable by means of the apparatus 1 is represented in figure 9 and overall indicated with 2. The tyre 2 comprises a carcass structure 3 having at least one carcass ply 4. A layer of impermeable elastomeric material or so-called liner 5 can be applied inside the carcass ply/plies 4. Two anchoring annular structures 6, each comprising a so-called bead-core 6a carrying an elastomeric filler 6b in a radially outer position, are engaged with respective end flaps 4a of the carcass ply/plies 4. The anchoring annular structures 6 are integrated in proximity to zones normally identified with the term "beads" 7, at which the engagement between the tyre 2 and a respective mounting rim normally occurs.

A belt structure 8, comprising one or more belt layers 8a, 8b, is extended circumferentially around the carcass structure 3, and a tread band 9 is circumferentially superimposed on the belt structure 8.

Two sidewalls 10 are applied in lateral opposite positions on the carcass ply/plies 4. Each sidewall has a radially inner apex 10a joined to the corresponding bead 7 and a radially outer terminal portion 10b joined to an axially outer edge 9a of the tread band 9.

On a radially inner surface 11 of the tyre 2, at least one self-sealing layer 12 is applied. The self-sealing layer 12 can for example comprise a material with polymeric base having suitable viscosity, applied according to a substantially uniform thickness against the liner 5, in a radially inner position. The self-sealing layer 12 can be provided with a protective film 13, e.g. made of thermoplastic material, applied in radially inner position. Further details on a possible embodiment of the self-sealing layer 12 are described in the document WO2011/064698, in the name of the same Applicant, which is considered entirely reported herein for reference purposes.

For the purpose of making the tyre 2, the self-sealing layer 12 can be provided in a carcass building line 14. Such layer is prebuilt in the form of a strip cut to size together with the possible protective film 13, and is wound circumferentially around the outer surface 37a of a building drum 15, in a manner such that its opposite flaps are joined head-head, i.e. mutually joined along a junction line L extending axially with respect to the radially inner surface 11, possibly with a superimposition of one on the other for a circumferential section approximately comprised between 5 mm and 20 mm, e.g. equal to about 10 mm.

In the same carcass building line 14, there is subsequently the deposition of the liner 5, of the ply/plies and/or of other components according to known modes, in order to obtain a carcass sleeve 16 in which the annular anchoring structures 6 engage the respective end flaps 4a of the carcass ply/plies 4, turned up around these.

Simultaneous with the attainment of the carcass sleeve 16 in the carcass building line 14, along an outer sleeve building line 17, at least one outer sleeve 18 can be attained, comprising the belt structure 8 and possibly the tread band 9 applied thereon.

The carcass sleeve 16 made on the building drum 15 is adapted to be removed from the building drum itself by means of a transfer device 19. In the illustrated example, the transfer device 19 comprises two or more closing elements 20 mutually movable between an expanded condition in which they are radially moved away from each other, and a contracted condition in which they are radially approached in order to retain the carcass sleeve 16 at a radially outer surface thereof.

Preferably, at least in the contracted condition, the closing elements 20 act against the radially outer surface of the carcass sleeve 16. More particularly, at least one of the closing elements 20 extends in contact against the radially outer surface of the carcass sleeve 16 substantially according to the entire axial extension of the carcass sleeve 16 itself, or at least according to an axial extension greater than the axial extension of the self-sealing layer 12.

The transfer device 19 with the closing elements 20 in the expanded condition is adapted to be positioned around the building drum 15, for example by means of an axial movement with respect to the latter. The closing elements 20 are radially approached in order to engage the carcass sleeve 16 against its radially outer surface, and the building drum 15 can be contracted in order to be disengaged from the carcass sleeve 16 with an axial movement of the drum itself, or of the transfer device 19. Preferably, the transfer device 19 is movable in approaching or moving away from the carcass building line 14, between the building drum 15 and an assembly station 21 configured for assembling the carcass sleeve 16 with the outer sleeve 18.

More particularly, in the illustrated example, the transfer device 19 is movable with respect to the building drum 15 away from the carcass building line 14, so as to carry out the removal of the carcass sleeve 16 along a first direction A parallel to a geometric axis X of rotation of the building drum 15 itself, up to reaching a wait position axially spaced from the building station, as in figure 1.

The transfer device 19 can also be movable with respect to the assembly station 21, preferably starting from the wait position, along a second direction B perpendicular to the first direction A and to the geometric axis X of the building drum 15. The carcass sleeve 16 is therefore adapted to be transferred to the assembly station 21 by means of a translation along the second direction B, so as to be brought into alignment with a geometric axis of the outer sleeve 18, arranged in the assembly station 21 by means of an auxiliary transfer device 22.

After having been disengaged from the building drum 15 and preferably before being transferred into the assembly station 21, the carcass sleeve 16 is subjected to the action of a manipulator 23 configured for applying a piece 24 of adhesive tape along said junction line L.

The piece 24 can be obtained by means of an operation of cutting to size executed on a continuous strip coming from a reel, for example. A tape of 3M^{™} Adhesive Transfer Tape 9502 type can be conveniently used, associated with a thin strip of nylon, altogether having thickness approximately comprised between 16 and 25 micron.

In order to facilitate an effective interaction with the manipulator 23, it is preferably provided that at the end of the building of the carcass sleeve 16, the building drum 15 is possibly rotated in order to position the junction line L in a predetermined position, for example closer with respect to the ground, around the geometric axis of rotation of the carcass sleeve 16, which at this moment coincides with the geometric axis of rotation of the building drum 15.

Preferably, the manipulator 23 cooperates with a support 25 configured for engaging the piece 24 of adhesive tape, and is movable from the support 25 to the transfer device 19 to pick up the piece 24 from the support 25 and transfer it to the carcass sleeve 16 retained by the transfer device 19, when the latter is situated in the wait position.

The preparation of the piece 24 on the support 25 can be executed manually or automatically by means of a loader 26, configured for arranging a new piece 24 of adhesive tape on the support 25 itself, after a preceding piece 24 has been picked up by means of the manipulator 23. The loader 26 is only schematically illustrated since it can be attained in any convenient manner.

The support 25 can for example comprise two abutment planes 27 that are mutually spaced and positionable with respect to each other in order to adapt their mutual distance to the length of the piece 24 of adhesive tape that must be applied. The piece 24 of adhesive tape can be suitable retained on the support 25 with the adhesive side thereof arranged against the abutment planes 27. For such purpose, it can be provided that through the abutment planes 27, an action of pneumatic attraction, electrostatic attraction or attraction of another type is exerted in order to facilitate the stability of the piece 24 on the support 25.

The manipulator 23 has at least two gripping elements 28 that are mutually spaced, for example in the form of prismatic blocks, each configured for engaging a respective end section 24a of the piece 24 carried by the support 25. Preferably, the gripping elements 28 are movable towards each other in order to adapt their mutual distance to a length dimension of the piece 24. For such purpose, provision can be made such that the gripping elements 28 are carried by a support plate 29. At least one of the gripping elements 28 is slidably mounted with respect to the support plate 29 by means of a sliding block/guide set (not illustrated), and positionable along the support plate 29 itself in order to adjust the distance thereof from the other gripping element 28. In the illustrated example, the blocking of the gripping element 28 with respect to the support plate 29 takes place by means of a clamp manually actuatable through a lever 30, but a motorized movement system may also be provided, operating on the sliding block/guide set.

The support plate 29 can be conveniently mounted on one end of an anthropomorphic robotic arm 31, programmable to be moved according to a desired path between the support 25 and the carcass sleeve 16 carried by the transfer device 19.

Preferably, the anthropomorphic robotic arm 31 is a collaborative robotic arm ("cobot") with at least 6 rotation axes, for example the model UR10e of Universal Robots can be employed.

Each of the gripping elements 28 is associated with at least one suction duct 32 that leads to a contact surface S configured to act against the piece 24. Preferably, the contact surface S is made on an elastically deformable spongy insert 33, forming part of each gripping element 28.

More particularly, each spongy insert 33 is fixed, e.g. by means of gluing, against a base wall 28a of the respective gripping element 28. Within each gripping element 28, at least one chamber 34 communicating with the suction duct 32 is preferably made. Preferably, each spongy insert 33 is made of spongy material with closed cells. The suction effect on the contact surface S can be conveniently obtained by means of a plurality of through holes 35 made through the spongy insert 33 and suitably distributed on the contact surface S itself. In the illustrated example in figure 8, each of the through holes 35 is placed in communication with the chamber 34 through a respective opening 36 arranged in the base wall 28a of the respective gripping element 28.

The material constituting each spongy insert 33 is selected so as to have a pliability suitable for facilitating the shape adaptability thereof to the shape of the inner surface of the carcass sleeve 16, and simultaneously rigid for opposing excessive deformations of the piece 24 due to the suction.

For the purpose of the application of the piece 24 on the carcass sleeve 16, it can be provide that the mutual distance of the gripping elements 28 be previously modified by moving at least one of the same, in order to adapt it to the length of the piece 24 arranged on the support 25.

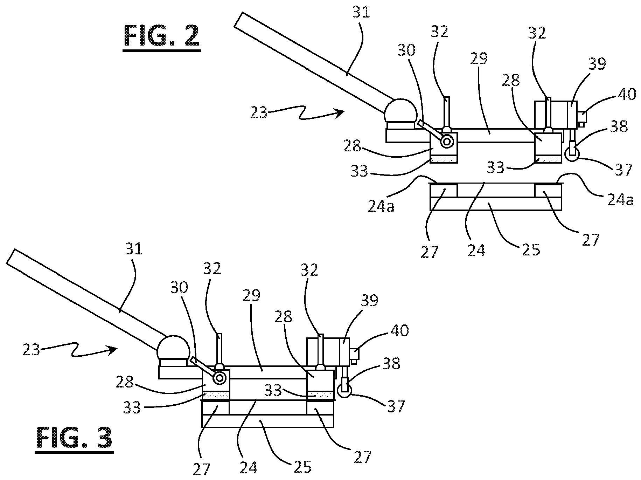

The robotic arm 31 of the manipulator 23 is activated according to a preset program in order to position the gripping elements 28 in approaching, at brief distance, with respect to the support 25 carrying the piece 24 arranged thereon, as in figure 2.

The gripping elements 28 are then approached to the support 25 according to a direction perpendicular to the lying plane of the piece 24, up to arriving against the piece itself by means of the contact surfaces S of each of these, as in figure 3.

Simultaneously with this approach step, a suction is activated through the suction duct 32. The piece 24 is then gripped by the gripping elements 28 at the opposite end sections 24a thereof, due to the suction produced through the suction duct 32 and consequently through the through holes 35 arranged in the spongy inserts 33.

The possible suction and/or electrostatic attraction exerted through the abutment planes 27 can be interrupted, in order to facilitate the separation of the piece 24 from the support 25.

The manipulator 23 is moved away from the support 25, determining the separation of the piece 24 from the support 25 itself, and its transfer to the carcass sleeve 16 upon action of the robotic arm 31.

More particularly, the movements of the robotic arm 31 determine the axial insertion of the gripping elements 28 and of the piece 24 retained thereby within the carcass sleeve 16, while the latter is retained by the transfer device 19 in the wait position.

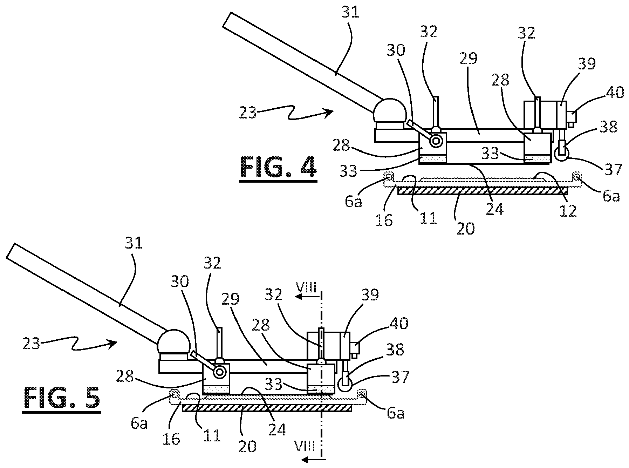

Upon completed insertion, the gripping elements 28 are preferably positioned equidistant from an axial centre line plane of the carcass sleeve 16, at brief distance from the junction line L of the end flaps of the self-sealing layer 12, as in figure 4.

With a movement radially away from the geometric axis of rotation of the carcass sleeve 16, the manipulator 23 is thus approached to the radially inner surface 11 of the carcass sleeve 16 up to bringing the piece 24 in contact on the junction line L, as in figure 5. The end sections 24a of the piece 24 are pressed against the inner surface of the carcass sleeve 16 at the junction line L by means of a thrust action exerted through the gripping elements 28. Therefore, a first fixing of the piece 24 in the carcass sleeve 16 is obtained due to the adhesive present on the side of the piece 24 in contact with the junction line L.

The elastic deformability of the spongy inserts 33 facilitates a geometric adaptation of the piece 24 to the inner shape of the carcass sleeve 16 and of the possible overlap between the end flaps of the self-sealing layer 12 at the junction line L.

The manipulator 23 can be conveniently associated with at least one pressure roller 37, preferably carried by the manipulator 23, activatable in thrust relation against the inner surface of the carcass sleeve 16 while the latter is retained by the transfer device 19.

The pressure roller 37 can conveniently have convex shape, with an outer surface 37a with curved profile in order to be better adapted to the inner curvature of the carcass sleeve 16.

The pressure roller 37 can be rotatably engaged with a bracket 38 integral with one of the gripping elements 28 and/or with the support plate 29. In the illustrated example, a fluid-dynamic actuator 39 carried by the manipulator 23, e.g. fixed to the support plate 29, operates on the bracket 38 carrying the pressure roller 37 (figure 9).

After the end sections 24a of the piece 24 have been pressed against the carcass sleeve 16, the suction action through the suction duct 32 can be interrupted and, upon possible disengagement of the gripping elements 28 from the piece itself, the pressure roller 37 can be activated in thrust relation towards the inner surface of the carcass sleeve 16. The thrust action can be obtained upon command of the fluid-dynamic actuator 39, or by means of the same robotic arm 31 which sustains the gripping elements 28.

A programmed movement of the robotic arm 31 determines a translation of the manipulator 23 and consequently of the pressure roller 37 along the entire longitudinal extension of the piece 24, so as to consolidate the fixing thereof along the junction line L. Due to the axial extension thereof greater than the axial extension of the self-sealing layer 12, the closing element 20 of the transfer device 19 positioned in radial alignment with respect to the junction line L provides a continuous contrast surface for opposing the thrust actions exerted against the radially inner surface of the carcass sleeve 16, by the gripping elements 28 of the manipulator 23 and/or by the pressure roller 37.

On the manipulator 23, for example at the gripping element 28 closer to the pressure roller 37, a chamber 40 can be installed that is activatable for acquiring one or more images of the piece 24 during or immediately after the application of the same along the junction line L.

These images are adapted to be electronically processed and compared with at least one previously stored reference sample, to verify the correct application of the piece 24 along the junction line L.

The above-described application of the piece 24 can be conveniently performed while - in the assembly station 21 - a preceding carcass sleeve 16 is assembled with an outer sleeve 18 of a tyre 2 being processed, exploiting the stay time of the transfer device 19 in the wait position.

The application of the piece 24 can thus be performed in an automated manner without significantly impacting the cycle time and hence the overall production times.

Upon completed application, the robotic arm 31 removes the gripping elements 28 from the carcass sleeve 16 in order to bring them back to the support 25, to pick up a new piece 24 of adhesive tape which in the meantime has been arranged on the support itself.

The transfer device 19 can in turn translate along the second direction B starting from the wait position, in order to transfer the carcass sleeve 16 to the assembly station 21 which in the meantime has been freed of the previously assembled tyre 2, and allow the coupling thereof with a new outer sleeve 18 which in the meantime has been attained in the outer sleeve building line 17 and transferred to the same assembly station 21 by means of the auxiliary transfer device 22.

The cycle then starts again, by transferring a further carcass sleeve 16 to the wait position by means of the transfer device 19, where the manipulator 23 will provide, by means of the robotic arm 31, to apply a new piece 24 at the junction line L of the self-sealing layer 12.

## Claims

1. Process for building a tyre for vehicle wheels, comprising:
making a carcass sleeve (16) on a building drum (15) comprising at least one carcass ply having axially outer edges engaged with respective annular reinforcing structures, and at least one self-sealing layer (12) applied on a radially inner surface (11) of the carcass sleeve (16),
wherein said self-sealing layer (12) is made as a band circumferentially extending along said radially inner surface (11) and having end flaps mutually joined along a junction line (L) extending axially with respect to the radially inner surface (11);
by means of a transfer device (19), removing the carcass sleeve (16) from the building drum (15);
applying a piece (24) of adhesive tape along said junction line (L),
wherein the application of said piece (24) comprises:
arranging the piece (24) on a support (25);
by means of a manipulator (23), picking up the piece (24) from the support (25) and transferring it to the carcass sleeve (16) to apply it on the junction line (L);
wherein during the application of the piece (24) the carcass sleeve (16) is retained by the transfer device (19) used to remove the carcass sleeve (16) from the building drum (15).

2. Process according to claim 1, wherein after the application of the piece (24) the carcass sleeve (16) is transferred to an assembly station (21) by means of the transfer device (19).

3. Process according to claim 1 or 2, wherein the application of the piece (24) is performed while, in an assembly station (21), a previous carcass sleeve (16) is assembled with an outer sleeve (18) of a tyre (2) being processed.

4. Process according to one or more of the preceding claims, wherein the application of the piece (24) comprises:
gripping respectively opposite end sections (24a) of the piece (24) by gripping elements (28) carried by the manipulator (23);
moving the manipulator (23) away from the support (25) in order to transfer the piece (24) retained by the gripping elements (28) onto said junction line (L);
disengaging the gripping elements (28) from the end sections (24a) of the piece (24).

5. Process according to claim 4, wherein gripping said end sections (24a) takes place by means of a suction action produced through each of said gripping elements (28).

6. Process according to claim 5, wherein the suction action is produced through at least one spongy insert (33) carried by each gripping element (28).

7. Process according to one or more of claims 4 to 6, further comprising translating a pressure roller (37) along the piece (24) after disengaging the gripping elements (28) from said end sections (24a), so as to fix the piece (24) along the junction line (L).

8. Process according to one or more of the preceding claims, further comprising rotating the carcass sleeve (16) to position the junction line (L) in a predetermined position around a geometric axis of rotation of the carcass sleeve (16), before the application of the piece (24).

9. Process as claimed in one or more of the preceding claims, comprising:
acquiring at least one image of said piece (24) during or after the application thereof at said junction line (L);
electronically processing said at least one image and comparing it with a previously stored sample image to verify the correct application of said piece (24) at said junction line (L).

10. Apparatus for building a tyre for vehicle wheels comprising:
a building drum (15) configured to engage a carcass sleeve (16) comprising at least one carcass ply having axially outer edges engaged in respective annular reinforcing structures, and at least one self-sealing layer (12) applied on a radially inner surface (11) of the carcass sleeve (16),
wherein said self-sealing layer (12) is made as a band circumferentially extending along said radially inner surface (11) and having mutually joined end flaps along a junction line (L) extending axially with respect to the radially inner surface (11);
a transfer device (19), configured to remove the carcass sleeve (16) from the building drum (15),
**characterized by** a support (25) configured to engage a piece (24) of adhesive tape and a manipulator (23) movable from the support (25) to the transfer device (19) to pick up the piece (24) from the support (25) and transfer it to the carcass sleeve (16) retained by the transfer device (19).

11. Apparatus according to claim 10, wherein the transfer device (19) comprises closing elements (20) which are mutually approachable to retain the carcass sleeve (16) at a radially outer surface thereof, wherein at least one of the closing elements (20) extends in contact with the radially outer surface of the carcass sleeve (16), according to an axial extension greater than the axial extension of the self-sealing layer (12).

12. Apparatus according to claim 10 or 11, wherein the manipulator (23) comprises gripping elements (28) that are mutually spaced, each configured to engage an end section (24a) of the piece (24) carried by the support (25), wherein the gripping elements (28) are movable towards each other to adapt their mutual distance to a length dimension of the piece (24).

13. Apparatus according to claim 12, wherein the gripping elements (28) are carried by an end of an anthropomorphic robotic arm (31), programmable to move according to a desired path between the support (25) and the carcass sleeve (16) carried by the transfer device (19).

14. Apparatus according to one or more of the claims from 16 to 18, wherein each gripping element (28) comprises at least one suction duct (32) converging to a contact surface (S) configured to act against the piece (24), wherein the contact surface (S) is carried by a spongy insert (33).

15. Apparatus according to claim 14, wherein the spongy insert (33) has a plurality of through holes (35) distributed on the contact surface (S).

## Patentansprüche

1. Verfahren zur Herstellung eines Reifens für Fahrzeugräder, umfassend die folgenden Schritte:
Herstellen einer Karkassenhülle (16) an einer Fertigungstrommel (15), die zumindest eine Karkassenlage mit axial äußeren Rändern, die mit jeweiligen ringförmigen Verstärkungsstrukturen in Eingriff stehen, und zumindest eine selbstdichtende Lage (12) umfasst, die auf eine radial innere Oberfläche (11) der Karkassenhülle (16) aufgebracht ist,
wobei die selbstdichtende Lage (12) als ein Streifen hergestellt ist, der sich in Umfangsrichtung entlang der radial inneren Oberfläche (11) erstreckt und Endklappen aufweist, die miteinander entlang einer Verbindungslinie (L) zusammengefügt sind, die sich axial in Bezug auf die radial innere Oberfläche (11) erstreckt;
Entfernen der Karkassenhülle (16) von der Fertigungstrommel (15) mittels einer Transfereinrichtung (19);
Anbringen eines Stücks (24) Klebeband entlang der Verbindungslinie (L),
wobei das Anbringen des Stücks (24) umfasst:
Anordnen des Stücks (24) auf einem Träger (25);
Aufnehmen des Stücks (24) von dem Träger (25) mittels eines Manipulators (23) und Übertragen auf die Karkassenhülle (16), um es auf der Verbindungslinie (L) anzubringen;
wobei während des Anbringens des Stücks (24) die Karkassenhülle (16) durch die Transfereinrichtung (19) gehalten wird, die verwendet wird, um die Karkassenhülle (16) von der Fertigungstrommel (15) zu entfernen.

2. Verfahren nach Anspruch 1, wobei nach dem Anbringen des Stücks (24) die Karkassenhülle (16) mittels der Transfereinrichtung (19) an eine Assemblierungsstation (21) überführt wird.

3. Verfahren nach Anspruch 1 oder 2, wobei das Anbringen des Stücks (24) erfolgt, während in einer Assemblierungsstation (21) eine vorhergehende Karkassenhülle (16) mit einer Außenhülle (18) eines in Bearbeitung befindlichen Reifens (2) assembliert wird.

4. Verfahren nach einem oder mehreren der vorhergehenden Ansprüche, wobei das Anbringen des Stücks (24) umfasst:
Ergreifen von jeweils gegenüberliegenden Endabschnitten (24a) des Stücks (24) durch Greifelemente (28), die von dem Manipulator (23) getragen werden;
Wegbewegen des Manipulators (23) von dem Träger (25), um das Stück (24), das von den Greifelementen (28) gehalten wird, auf die Verbindungslinie (L) zu übertragen;
Außereingriffbringen der Greifelemente (28) von den Endabschnitten (24a) des Stücks (24).

5. Verfahren nach Anspruch 4, wobei das Ergreifen der Endabschnitte (24a) mittels einer Saugwirkung erfolgt, die durch jedes der Greifelemente (28) erzeugt wird.

6. Verfahren nach Anspruch 5, wobei die Saugwirkung durch zumindest einen schwammartigen Einsatz (33) erzeugt wird, die von jedem Greifelement (28) getragen wird.

7. Verfahren nach einem oder mehreren der Ansprüche 4 bis 6, ferner umfassend das Verschieben einer Druckrolle (37) entlang des Stücks (24) nach dem Außereingriffbringen der Greifelemente (28) von den Endabschnitten (24a), um das Stück (24) entlang der Verbindungslinie (L) zu fixieren.

8. Verfahren nach einem oder mehreren der vorhergehenden Ansprüche, ferner umfassend das Drehen der Karkassenhülle (16) vor dem Anbringen des Stücks (24), um die Verbindungslinie (L) in einer vorbestimmten Position um eine geometrische Drehachse der Karkassenhülle (16) zu positionieren.

9. Verfahren nach einem oder mehreren der vorhergehenden Ansprüche, umfassend:
Erfassen zumindest eines Bilds des Stücks (24) während oder nach dem Anbringen desselben an der Verbindungslinie (L);
elektronisches Verarbeiten des zumindest einen Bilds und Vergleichen mit einem zuvor gespeicherten Testbild, um die korrekte Anbringung des Stücks (24) an der Verbindungslinie (L) zu verifizieren.

10. Einrichtung zur Herstellung von Reifen für Fahrzeugräder, umfassend:
eine Fertigungstrommel (15), die dazu ausgestaltet ist, mit einer Karkassenhülle (16) in Eingriff zu gelangen, die zumindest eine Karkassenlage mit axial äußeren Rändern, die mit jeweiligen ringförmigen Verstärkungsstrukturen in Eingriff stehen, und zumindest einer selbstdichtenden Lage (12) umfasst, die auf eine radial innere Oberfläche (11) der Karkassenhülle (16) aufgebracht ist,
wobei die selbstdichtende Lage (12) als ein Streifen hergestellt ist, der sich in Umfangsrichtung entlang der radial inneren Oberfläche (11) erstreckt und Endklappen aufweist, die miteinander entlang einer Verbindungslinie (L) zusammengefügt sind, die sich axial in Bezug auf die radial innere Oberfläche (11) erstreckt;
eine Transfereinrichtung (19), die dazu ausgestaltet ist, die Karkassenhülle (16) von der Fertigungstrommel (15) zu entfernen,
**gekennzeichnet durch**
einen Träger (25), der dazu ausgestaltet ist, mit einem Stück (24) Klebeband in Eingriff zu gelangen, und
einen Manipulator (23), der von dem Träger (25) zu der Transfereinrichtung (19) bewegbar ist, um das Stück (24) von dem Träger (25) aufzunehmen und es an die Karkassenhülle (16) zu überführen, die von der Transfereinrichtung (19) gehalten wird.

11. Einrichtung nach Anspruch 10, wobei die Transfereinrichtung (19) Schließelemente (20) umfasst, die aneinander annäherbar sind, um die Karkassenhülle (16) an einer radial äußeren Oberfläche derselben zu halten, wobei zumindest eines der Schließelemente (20) sich in Kontakt mit der radial äußeren Oberfläche der Karkassenhülle (16) erstreckt, über eine axiale Erstreckung, die größer ist als die axiale Erstreckung der selbstdichtenden Lage (12).

12. Einrichtung nach Anspruch 10 oder 11, wobei der Manipulator (23) Greifelemente (28) umfasst, die voneinander beabstandet und jeweils dazu ausgestaltet sind, mit einem Endabschnitt (24a) des Stücks (24), das von dem Träger (25) getragen wird, in Eingriff zu gelangen, wobei die Greifelemente (28) zueinander hin bewegbar sind, um ihren gegenseitigen Abstand an eine Längendimension des Stücks (24) anzupassen.

13. Einrichtung nach Anspruch 12, wobei die Greifelemente (28) von einem Ende eines anthropomorphen Roboterarms (31) getragen werden, der programmierbar ist, um sich entlang eines gewünschten Pfads zwischen dem Träger (25) und der Karkassenhülle (16), die von der Transfereinrichtung (19) getragen wird, zu bewegen.

14. Einrichtung nach einem oder mehreren der Ansprüche 16 bis 18, wobei jedes Greifelement (28) zumindest einen Saugkanal (32) umfasst, der zu einer Kontaktoberfläche (S) zusammenläuft und dazu ausgestaltet ist, gegen das Stück (24) zu wirken, wobei die Kontaktoberfläche (S) von einem schwammartigen Einsatz (33) getragen wird.

15. Einrichtung nach Anspruch 14, wobei der schwammartige Einsatz (33) eine Vielzahl von Durchgangslöchern (35) aufweist, die auf der Kontaktoberfläche (S) verteilt sind.

## Revendications

1. Procédé de construction d'un pneu pour roues de véhicule, comprenant :
la fabrication d'un manchon de carcasse (16) sur un tambour de construction (15) comprenant au moins un pli de carcasse ayant des bords axialement externes s'engageant avec des structures de renforcement annulaires respectives, et au moins une couche auto-obturante (12) appliquée sur une surface radialement interne (11) du manchon de carcasse (16),
dans lequel ladite couche auto-obturante (12) est réalisée sous la forme d'une bande s'étendant de manière circonférentielle le long de ladite surface radialement interne (11) et ayant des flaps d'extrémité mutuellement joints le long d'une ligne de jonction (L) s'étendant axialement par rapport à la surface radialement interne (11) ;
au moyen d'un dispositif de transfert (19), le retrait du manchon de carcasse (16) du tambour de construction (15) ;
l'application d'un morceau (24) de ruban adhésif le long de ladite ligne de jonction (L),
dans lequel l'application dudit morceau (24) comprend le fait de :
agencer le morceau (24) sur un support (25) ;
au moyen d'un manipulateur (23), prélever le morceau (24) du support (25) et le transférer sur le manchon de carcasse (16) pour l'appliquer sur la ligne de jonction (L) ;
dans lequel lors de l'application du morceau (24) le manchon de carcasse (16) est retenu par le dispositif de transfert (19) utilisé pour retirer le manchon de carcasse (16) du tambour de construction (15).

2. Procédé selon la revendication 1, dans lequel après l'application du morceau (24) le manchon de carcasse (16) est transféré à un poste d'assemblage (21) au moyen du dispositif de transfert (19).

3. Procédé selon la revendication 1 ou 2, dans lequel l'application du morceau (24) est effectuée pendant que, dans un poste d'assemblage (21), un manchon de carcasse précédent (16) est assemblé avec un manchon externe (18) d'un pneu (2) en cours de traitement.

4. Procédé selon une ou plusieurs des revendications précédentes, dans lequel l'application du morceau (24) comprend :
la saisie de sections d'extrémité respectivement opposées (24a) du morceau (24) par des éléments de saisie (28) portés par le manipulateur (23) ;
l'éloignement du manipulateur (23) du support (25) afin de transférer le morceau (24) retenu par les éléments de saisie (28) sur ladite ligne de jonction (L) ;
le désengagement des éléments de saisie (28) des sections d'extrémité (24a) du morceau (24).

5. Procédé selon la revendication 4, dans lequel la saisie desdites sections d'extrémité (24a) s'effectue au moyen d'une action d'aspiration produite à travers chacun desdits éléments de saisie (28).

6. Procédé selon la revendication 5, dans lequel l'action d'aspiration est produite à travers au moins un insert spongieux (33) porté par chaque élément de saisie (28).

7. Procédé selon une ou plusieurs des revendications 4 à 6, comprenant en outre la translation d'un rouleau de pression (37) le long du morceau (24) après désengagement des éléments de saisie (28) desdites sections d'extrémité (24a), de manière à fixer le morceau (24) le long de la ligne de jonction (L).

8. Procédé selon une ou plusieurs des revendications précédentes, comprenant en outre la rotation du manchon de carcasse (16) pour positionner la ligne de jonction (L) dans une position prédéterminée autour d'un axe géométrique de rotation du manchon de carcasse (16), avant l'application du morceau (24).

9. Procédé tel que revendiqué dans une ou plusieurs des revendications précédentes, comprenant :
l'acquisition d'au moins une image dudit morceau (24) pendant ou après son application au niveau de ladite ligne de jonction (L) ;
le traitement électronique de ladite au moins une image et la comparaison de celle-ci avec une image échantillon précédemment stockée pour vérifier l'application correcte dudit morceau (24) au niveau de ladite ligne de jonction (L).

10. Appareil de construction d'un pneu pour roues de véhicule comprenant :
un tambour de construction (15) configuré pour s'engager avec un manchon de carcasse (16) comprenant au moins un pli de carcasse ayant des bords axialement externes s'engageant dans des structures de renforcement annulaires respectives, et au moins une couche auto-obturante (12) appliquée sur une surface radialement interne (11) du manchon de carcasse (16),
dans lequel ladite couche auto-obturante (12) est réalisée sous la forme d'une bande s'étendant de manière circonférentielle le long de ladite surface radialement interne (11) et ayant des flaps d'extrémité mutuellement joints le long d'une ligne de jonction (L) s'étendant axialement par rapport à la surface radialement interne (11) ;
un dispositif de transfert (19), configuré pour retirer le manchon de carcasse (16) du tambour de construction (15), **caractérisé par**
un support (25) configuré pour s'engager avec un morceau (24) de ruban adhésif et
un manipulateur (23) mobile du support (25) au dispositif de transfert (19) pour prélever le morceau (24) du support (25) et le transférer au manchon de carcasse (16) retenu par le dispositif de transfert (19).

11. Appareil selon la revendication 10, dans lequel le dispositif de transfert (19) comprend des éléments de fermeture (20) pouvant être mutuellement rapprochés pour retenir le manchon de carcasse (16) au niveau d'une surface radialement externe de celuici, dans lequel au moins l'un des éléments de fermeture (20) s'étend en contact avec la surface radialement externe du manchon de carcasse (16), selon une extension axiale supérieure à l'extension axiale de la couche auto-obturante (12).

12. Appareil selon la revendication 10 ou 11, dans lequel le manipulateur (23) comprend des éléments de saisie (28) qui sont mutuellement espacés, configurés chacun pour s'engager avec une section d'extrémité (24a) du morceau (24) porté par le support (25), dans lequel les éléments de saisie (28) sont mobiles les uns vers les autres pour adapter leur distance mutuelle à une dimension de longueur du morceau (24).

13. Appareil selon la revendication 12, dans lequel les éléments de saisie (28) sont portés par une extrémité d'un bras robotique anthropomorphe (31), programmable pour se déplacer selon un trajet souhaité entre le support (25) et le manchon de carcasse (16) porté par le dispositif de transfert (19).

14. Appareil selon une ou plusieurs des revendications 16 à 18, dans lequel chaque élément de saisie (28) comprend au moins un conduit d'aspiration (32) convergeant vers une surface de contact (S) configurée pour agir contre le morceau (24), dans lequel la surface de contact (S) est portée par un insert spongieux (33).

15. Appareil selon la revendication 14, dans lequel l'insert spongieux (33) présente une pluralité de trous traversants (35) répartis sur la surface de contact (S).
